(19)

Europäisches
Patentamt
European
Patent Office
Office européen
des brevets

(11) **EP 4 053 240 A1**

(12) **EUROPEAN PATENT APPLICATION**
published in accordance with Art. 153(4) EPC

(43) Date of publication:
**07.09.2022   Bulletin 2022/36**

(21) Application number: **20881695.9**

(22) Date of filing: **18.09.2020**

(51) International Patent Classification (IPC):
*C09J 161/06* [(2006.01)]   *C09J 11/06* [(2006.01)]
*C09J 129/14* [(2006.01)]   *C09K 3/14* [(2006.01)]
*F16D 69/04* [(2006.01)]

(52) Cooperative Patent Classification (CPC):
**C09J 11/06; C09J 129/14; C09J 161/06;**
C09K 3/14; F16D 69/04

(86) International application number:
**PCT/JP2020/035417**

(87) International publication number:
**WO 2021/084963 (06.05.2021 Gazette 2021/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.11.2019   JP 2019199837**

(71) Applicant: **Sumitomo Bakelite Co., Ltd.
Shinagawa-ku
Tokyo 140-0002 (JP)**

(72) Inventor: **SUZUKI, Yuji
Tokyo 140-0002 (JP)**

(74) Representative: **Ter Meer Steinmeister & Partner
Patentanwälte mbB
Nymphenburger Straße 4
80335 München (DE)**

(54) **ADHESIVE AGENT COMPOSITION FOR WET-TYPE FRICTION MEMBER**

(57)     Provided is an adhesive agent composition for a wet-type friction member, including a resol-type phenol resin, a polyvinyl butyral, and a solvent, in which a weight average molecular weight of the resol-type phenol resin is equal to or more than 1200 and equal to or less than 2000.

EP 4 053 240 A1

**Description**

TECHNICAL FIELD

The present invention relates to an adhesive agent composition for a wet-type friction member.

BACKGROUND ART

In automatic transmissions such as automatic cars, a clutch installed between an engine and a transmission is used to transmit or disconnect an engine force to the transmission when starting, stopping, and shifting. Friction members are used for the clutch to function properly, and are generally classified into a "wet-type friction member" using oil and a "dry-type friction member" not using oil. The wet-type friction member can suppress an increase in frictional heat by using oil. The wet-type friction member is manufactured by coating a metal called a core plate with an adhesive agent and adhering the metal to a member made of paper or the like impregnated and cured with a phenol resin or the like.

As an adhesive agent used in a case of producing a friction member such as a clutch or a brake, a resol-type phenol resin, which is a resin material having excellent mechanical properties, electrical properties, and adhesiveness, has been used in the related art. Therefore, in the related art, in order to improve friction resistance property of the wet-type friction member to be obtained, various studies have been conducted on the resol-type phenol resin to improve curing characteristics such as adhesive strength.

As the resol-type phenol resin used for the wet-type friction member, for example, resol-type phenol resins disclosed in Patent Documents 1 and 2 have been known. Patent Document 1 discloses an adhesive agent composition including a resol-type phenol resin, a polyvinyl butyral resin, nickel acetate or cobalt acetate, which is a polyvalent metal salt, and a metal salt of nitrous acid or an ester of nitrous acid, with which a curing time is shortened and heat resistance is obtained.

Patent Document 2 discloses an adhesive agent for a wet-type friction plate, including a resol-type phenol resin and a nitrate or nitric acid, with which excellent adhesive strength exhibits.

RELATED DOCUMENT

PATENT DOCUMENT

[Patent Document 1] Japanese Unexamined Patent Publication No. 2014-24881
[Patent Document 2] Japanese Unexamined Patent Publication No. 2006-83892

SUMMARY OF THE INVENTION

TECHNICAL PROBLEM

In recent years, demands for an adhesive agent for a wet-type friction member have been increased. The present invention has been developed to meet the high demands, and provides an adhesive agent composition for a wet-type friction member, which has excellent adhesive strength and has good workability and coatability.

SOLUTION TO PROBLEM

The present inventors have found that, by using a resol-type phenol resin having a specific molecular weight, an adhesive agent which has excellent adhesive force, has excellent handleability during use, and can be suitably used for a wet-type friction member can be obtained without using additives used in the related art.

According to the present invention, an adhesive agent composition for a wet-type friction member including a resol-type phenol resin, a polyvinyl butyral, and a solvent, in which a weight average molecular weight of the resol-type phenol resin is equal to or more than 1200 and equal to or less than 2000, is provided.

ADVANTAGEOUS EFFECTS OF INVENTION

According to the present invention, an adhesive agent composition for a wet-type friction member, which has excellent adhesive strength and has good workability and coatability, is provided.

DESCRIPTION OF EMBODIMENTS

Hereinafter, embodiments of the present invention will be described.

(Adhesive agent composition for wet-type friction member)

An adhesive agent composition for a wet-type friction member (hereinafter, also referred to as an adhesive agent composition) according to the present embodiment includes a resol-type phenol resin, a polyvinyl butyral, and a solvent. Hereinafter, each component will be described.

[Resol-type phenol resin]

The resol-type phenol resin used in the adhesive agent composition according to the present embodiment has a weight average molecular weight of equal to or more than 1200 and equal to or less than 2000. By using the resol-type phenol resin having a weight average molecular weight within the above-described range, both excellent adhesiveness and solvent solubility can be achieved. More specifically, as the molecular weight of the resol-type phenol resin increases, adhesive strength increases, but as the molecular weight is higher, solubility in the solvent is lowered. As a result, coatability and handleability of the obtained adhesive agent composition may be inferior. The present inventor has found that, in a case where the resol-type phenol resin having a weight average molecular weight within the above-described range is used, excellent adhesive strength can be ensured while maintaining the desired degree of solvent solubility. That is, the adhesive agent composition including the resol-type phenol resin having a weight average molecular weight within the above-described range has excellent adhesiveness, as well as excellent coatability and handleability.

The resol-type phenol resin used in the adhesive agent composition according to the present embodiment is a resin obtained by reacting phenols and aldehydes in a reaction solvent under predetermined conditions described below in the presence of a basic catalyst.

Examples of the phenols used for the synthesis of the resol-type phenol resin used in the present embodiment include phenol; cresols such as o-cresol, m-cresol, and p-cresol; ethylphenols such as o-ethylphenol, m-ethylphenol, and p-ethylphenol; butylphenols such as isopropylphenol, butylphenol, and p-tert-butylphenol; alkylphenols such as p-tert-amylphenol, p-octylphenol, p-nonylphenol, and p-cumylphenol; halogenated phenols such as fluorophenol, chlorophenol, bromophenol, and iodophenol; monovalent phenol substitutions such as p-phenylphenol, aminophenol, nitrophenol, dinitrophenol, and trinitrophenol; monovalent phenols such as 1-naphthol and 2-naphthol; and polyvalent phenols such as resorcin, alkylresorcin, pyrogallol, catechol, alkylcatechol, hydroquinone, alkylhydroquinone, fluoroglucolcin, bisphenol A, bisphenol F, bisphenol S, and dihydroxynaphthalin. These may be used alone or in combination of two or more thereof.

Examples of the aldehydes used to synthesize the resol-type phenol resin used in the present embodiment include formaldehyde, paraformaldehyde, trioxane, acetaldehyde, propionaldehyde, polyoxymethylene, chloral, hexamethylenetetramine, furfural, glyoxal, n-butylaldehyde, caproaldehyde, allylaldehyde, benzaldehyde, crotonaldehyde, acrolein, tetraoxymethylene, phenyl acetaldehyde, o-tolualdehyde, and salicylaldehyde. These may be used alone or in combination of two or more thereof. In addition, it is also possible to use precursors of these aldehydes or solutions of these aldehydes. Among these, from the viewpoint of production cost, it is preferable to use an aqueous solution of formaldehyde.

Examples of the basic catalyst used to synthesize the resol-type phenol resin used in the present embodiment include hydroxides of alkali metals or alkaline earth metals such as sodium hydroxide, potassium hydroxide, and calcium hydroxide; carbonates such as sodium carbonate and calcium carbonate; oxides such as lime; sulfites such as sodium sulfite; phosphates such as sodium phosphate; and amines such as ammonia, trimethylamine, triethylamine, monoethanolamine, diethanolamine, triethanolamine, hexamethylenetetramine, and pyridine.

Water is generally used as the reaction solvent used to synthesize the resol-type phenol resin used in the present embodiment, but an organic solvent may be used. Specific examples of such an organic solvent include alcohols, ketones, and aromatics. In addition, specific examples of the alcohols include methanol, ethanol, propyl alcohol, ethylene glycol, diethylene glycol, triethylene glycol, and glycerin. Specific examples of the ketones include acetone and methyl ethyl ketone. Specific examples of the aromatics include toluene and xylene.

Examples of a form of the resol-type phenol resin include solids, aqueous solutions, solvent solutions, and aqueous dispersions. Among these, from the viewpoint of improving workability, solvent solutions of methanol, ethanol, methyl ethyl ketone, and acetone are preferable.

An amount of a free phenol (phenol remaining unreacted) included in the resol-type phenol resin used in the present embodiment is preferably equal to or less than 5.0% by mass, more preferably equal to or less than 4.0% by mass with respect to the total of the resol-type phenol resin. The lower limit value of the amount of the free phenol included in the resol-type phenol resin is not particularly limited, but is, for example, equal to or more than 0.1% by mass, preferably equal to or more than 0.5% by mass with respect to the total of the resol-type phenol resin. In a case where the amount of the free phenol is equal to or less than the above-described upper limit value, the resol-type phenol resin has good solvent solubility and excellent storage stability in spite of its high weight average molecular weight of equal to or more than 1200 and equal to or less than 2000. In addition, in a case where the amount of the free phenol is equal to or more than the above-described lower limit value, since no special equipment or process is required to completely remove the free phenol, the production cost can be suppressed.

The resol-type phenol resin used in the present embodiment is obtained by mixing the phenols (P) and the aldehydes (F) at a ratio such that a blending molar ratio (F/P) is equal to or more than 1.5, preferably equal to or more than 1.5 and equal to or less than 2.0 and more preferably equal to or more than 1.6 and equal to or less than 1.9, further adding the above-described basic catalyst as a polymerization catalyst, and performing reflux for an appropriate time (for example, 3 to 6 hours). In a case where the blending molar ratio (F/P) of the phenols (P) and the aldehydes (F) is less than 1.5, the weight average molecular weight of the resol-type phenol resin produced may be smaller than 1200. In addition, in a case where the blending molar ratio (F/P) of the phenols (P) and the aldehydes (F) is more than 2.0, since gelation of the resin tends to proceed during the reaction, reaction efficiency is lowered, and a high-molecular-weight resol-type phenol resin having a weight average molecular weight of more than 2000 is produced, which is not preferable. A reaction temperature is, for example, 40°C to 120°C, preferably 60°C to 100°C. As a result, the gelation can be suppressed and a resol-type phenol resin having a target molecular weight can be obtained.

[Polyvinyl butyral]

The polyvinyl butyral is an elastomer obtained by converting polyvinyl alcohol to butyral with butyraldehyde in the presence of an acid catalyst.

A weight average molecular weight of the polyvinyl butyral is not particularly limited, but from the viewpoint of handleability of polyvinyl butyral, and the like, the weight average molecular weight thereof is preferably $1.0 \times 10^4$ to $1.0 \times 10^5$, more preferably $2.0 \times 10^4$ to $8.0 \times 10^4$, and still more preferably $3.3 \times 10^4$ to $5.5 \times 10^4$.

The weight average molecular weight is based on polystyrene conversion measured by gel permeation chromatography (GPC).

A degree of polymerization of the polyvinyl butyral is preferably 200 to 3000. By setting the degree of polymerization to equal to or more than 200, a sufficient adhesive strength can be obtained, and by setting the degree of polymerization to equal to or less than 3000, viscosity of the obtained adhesive agent composition at the time of melting can be suppressed to a low level, whereby a metal base material and a friction member can be firmly adhered to each other.

(Production of adhesive agent composition)

The adhesive agent composition according to the present embodiment is obtained by mixing the above-described components by a known method. From the viewpoint of handleability, the adhesive agent composition is provided in a form of a solution dissolved in an organic solvent. Specific examples of the organic solvent include alcohol-based organic solvents such as methanol, ethanol, isopropanol, and butanol; ketone-based organic solvents such as acetone, methyl ethyl ketone, and methyl isobutyl ketone; aromatic hydrocarbon solvents such as toluene and ethylbenzene; and mixtures thereof.

In the adhesive agent composition according to the present embodiment, a content of the polyvinyl butyral is 1 to 50 parts by weight, preferably 5 to 30 parts by weight with respect to 100 parts by weight of the resol-type phenol resin. By setting the content of the polyvinyl butyral to equal to or more than the lower limit value, a sufficient adhesive strength can be obtained, and by setting the content to equal to or less than the upper limit value, viscosity of the adhesive agent at the time of melting can be kept low.

In the adhesive agent composition according to the present embodiment, the amount of the free phenol is equal to or less than 2.0% by mass, preferably equal to or less than 1.0% by mass with respect to a total solid content of the adhesive agent composition. The lower limit value of the amount of the free phenol included in the adhesive agent composition is not particularly limited, but is equal to or more than 0.1% by mass, preferably equal to or more than 0.5% by mass with respect to the total solid content of the adhesive agent composition. In a case where the amount of the free phenol is within the above-described range, the adhesive agent composition has excellent storage stability.

The adhesive agent composition according to the present embodiment is substantially free of substances with high environmental load, such as nickel and cobalt, which are used in adhesive agents in the related art. In such an adhesive agent composition, since wear debris generated during braking of a friction plate produced using the adhesive agent composition does not contain substances with high environmental load, there is no risk of environmental pollution.

It is preferable that the adhesive agent composition according to the present embodiment includes little or no additive other than the above-described components. In other words, it is preferable that the adhesive agent composition according to the present embodiment substantially consists of the above-described resol-type phenol resin, the above-described polyvinyl butyral, and the above-described solvent. As a result, an adhesive agent composition having excellent storage stability can be obtained.

Since the adhesive agent composition according to the present embodiment consists of the above-described components, the adhesive agent composition according to the present embodiment has excellent adhesiveness and solvent solubility. The adhesive agent composition according to the present embodiment has a methanol tolerance (25°C), as an index of solubility, of equal to or more than 1000%. Therefore, the adhesive agent composition according to the present embodiment has excellent workability during use and coatability. As the value of the methanol tolerance is higher, solubility in methanol is higher, and equal to or more than 100% is required for the use of an adhesive agent for a wet-type friction member.

The methanol tolerance can be measured as follows.

First, 10 ml of the adhesive agent composition is measured in a 500 ml graduated cylinder, and methanol is gradually added thereto while keeping the temperature at 25°C and stirring. The methanol tolerance is calculated by the following expression from the amount (volume) of methanol added in a case where the mixed solution of the adhesive agent composition and the methanol becomes cloudy.

```
Methanol tolerance (%) = (addition amount (ml) of

methanol/10 ml of adhesive agent composition) × 100
```

The viscosity of the adhesive agent composition according to the present embodiment is preferably equal to or more than 800 mPa and equal to or less than 1200 mPa, and more preferably equal to or more than 850 mPa and equal to or less than 1100 mPa. Within such a numerical range, workability and coatability can be improved while maintaining high adhesive strength.

The viscosity is measured using an E-type viscometer (manufactured by Toki Sangyo Co., Ltd.) in accordance with JIS Z8803.

The adhesive agent composition according to the present embodiment is suitably used for producing a wet-type friction plate. The wet-type friction plate can be produced by adhering a metal base material (steel plate) and a friction plate to each other using the adhesive agent composition according to the present embodiment. In the wet-type friction plate obtained above, the friction plate and the metal base material are firmly adhered to each other and have excellent heat resistance.

The embodiments of the present invention have been described above, but these are examples of the present invention and various configurations other than the above can be adopted.

EXAMPLES

Hereinafter, the present invention will be described with reference to Examples and Comparative Examples, but the present invention is not limited thereto.

(Example 1)

[Preparation of adhesive agent composition]

To a reaction device with a stirrer, a reflux condenser, and a thermometer, 100 parts by weight of phenol, 151 parts by weight of 37% formalin aqueous solution (F/P molar ratio = 1.7), and 5 parts by weight of triethylamine were added, and the mixture was reacted under reflux conditions for 40 minutes. Thereafter, while dehydrating under a reduced pressure condition of 91 kPa, 40 parts by weight of methanol was added thereto when the temperature in the system reached 70°C, and the reaction was carried out at 80°C for 2 hours to obtain a resol-type phenol resin having a weight average molecular weight of 1382. 120 parts by weight of methanol and 30 parts by weight of a polyvinyl butyral resin were added thereto, and dissolved and mixed with each other to obtain an adhesive agent composition for a wet-type friction member, having 1.5% of free phenol and 50% of non-volatile content.

(Example 2)

[Preparation of adhesive agent composition]

An adhesive agent composition for a wet-type friction member, having a weight average molecular weight of 1761 and having 1.2% of free phenol and 50% of non-volatile content, was obtained by the same operation as in Example 1, except that the formalin aqueous solution in Example 1 was changed to be 160 parts by weight (F/P molar ratio = 1.8).

(Example 3)

[Preparation of adhesive agent composition]

An adhesive agent composition for a wet-type friction member, having a weight average molecular weight of 1228 and having 1.8% of free phenol and 50% of non-volatile content, was obtained by the same operation as in Example 1, except that the formalin aqueous solution in Example 1 was changed to be 143 parts by weight (F/P molar ratio = 1.6).

(Example 4)

[Preparation of adhesive agent composition]

An adhesive agent composition for a wet-type friction member, having a weight average molecular weight of 1450 and having 1.3% of free phenol and 50% of non-volatile content, was obtained by the same operation as in Example 1, except that the reaction under the reflux conditions of Example 1 was performed for 45 minutes.

(Comparative Example 1)

[Synthesis of resol-type phenol resin]

To a reaction device with a stirrer, a reflux condenser, and a thermometer, 100 parts by weight of phenol, 117 parts by weight of 37% formalin aqueous solution (F/P molar ratio = 1.2), and 4 parts by weight of 30% ammonia aqueous solution were added, and the mixture was reacted under reflux conditions for 40 minutes. Thereafter, while dehydrating under a reduced pressure condition of 91 kPa, 20 parts by weight of methanol was added thereto when the temperature in the system reached 70°C, and the reaction was carried out at 80°C for 1 hour. Next, 80 parts by weight of methanol was added thereto to obtain a resol-type phenol resin 5 having 50% of non-volatile content. A weight average molecular weight of the obtained resol-type phenol resin 5 was 1100. An amount of a free phenol in the obtained resol-type phenol resin 5 was 3.0% by mass.

[Preparation of adhesive agent composition]

100 parts by weight of the obtained resol-type phenol resin 5, 13 parts by weight of a polyvinyl butyral resin (PVB), 2 parts by weight of resorcin, and 15 parts by weight of methanol were dissolved and mixed with each other to obtain an adhesive agent composition for a wet-type friction member, including 3% by mass of resorcin with respect to the total solid content.

(Comparative Example 2)

[Synthesis of resol-type phenol resin]

To a reaction device with a stirrer, a reflux condenser, and a thermometer, 100 parts by weight of phenol, 117 parts by weight of 37% formalin aqueous solution (F/P molar ratio = 1.2), and 4 parts by weight of 30% ammonia aqueous solution were added, and the mixture was reacted under reflux conditions for 40 minutes. Thereafter, while dehydrating under a reduced pressure condition of 91 kPa, 20 parts by weight of methanol was added thereto when the temperature in the system reached 70°C, and the reaction was carried out at 80°C for 1 hour. Next, 80 parts by weight of methanol was added thereto to obtain a resol-type phenol resin 5 having 50% of non-volatile content. A weight average molecular weight of the obtained resol-type phenol resin 5 was 1100. An amount of a free phenol in the obtained resol-type phenol resin 5 was 3.0% by mass.

[Preparation of adhesive agent composition]

100 parts by weight of the obtained resol-type phenol resin 5, 13 parts by weight of a polyvinyl butyral resin (PVB), and 15 parts by weight of methanol were dissolved and mixed with each other to obtain an adhesive agent composition for a wet-type friction member, including 3% by mass of resorcin with respect to the total solid content.

(Evaluation)

The following evaluations were performed using the adhesive agent compositions obtained in Examples and Comparative Examples.

- Methanol tolerance: First, 10 ml of the adhesive agent composition was measured in a 500 ml graduated cylinder, and methanol was gradually added thereto while keeping the temperature at 25°C and stirring. The methanol tolerance was calculated by the following expression from the amount (volume) of methanol added in a case where the mixed solution of the adhesive agent composition and the methanol became cloudy. The results are shown in Table 1.

$$\texttt{Methanol tolerance (\%) = (addition amount (ml) of}$$

$$\texttt{methanol/10 ml of adhesive agent composition for wet-type}$$

$$\texttt{friction member)} \times 100$$

- Viscosity: Viscosity of the adhesive agent composition was measured using an E-type viscometer (manufactured by Toki Sangyo Co., Ltd.) in accordance with JIS Z8803. The results are shown in Table 1.
- Adhesive strength (non-peeling area ratio): The above-described adhesive agent composition was applied to a pickled steel plate, an impregnated paper, which was produced by impregnating and curing an aramid base material with a phenol resin, was adhered thereto by a heat press (250°C, 10 MPa), and an area where an adhesive surface was not peeled off in a case of being bent at 90° was measured and a proportion (%) to an adhesive area before the bending was calculated. The results are shown in Table 1.
- Storage stability: Viscosity of the adhesive agent composition after being stored in a closed container for 30 days in an environment of 10°C was evaluated according to the following standard. The results are shown in Table 1.

     A: Viscosity after storage was less than 1500 mPa·s
     C: Viscosity after storage was equal to or more than 1500 mPa·s (equal to or more than 1.5 times compared to the viscosity immediately after production)

- Workability: Cleaning workability in a case where the adhesive agent composition was placed in a stainless steel vat and the stainless steel vat was washed with methanol was evaluated according to the following standard. The results are shown in Table 1.

     A: No deposits of the adhesive agent composition remained in the stainless steel vat, and the cleaning workability was very good.
     B: A small amount of deposits of the adhesive agent composition remained in the stainless steel vat, but there was no problem with cleaning workability, and the cleaning workability was good.
     C: Deposits of the adhesive agent composition were found in the stainless steel vat, and the cleaning property was poor.

[Table 1]

| | | Unit | Example 1 | Example 2 | Example 3 | Example 4 | Comparative Example 1 | Comparative Example 2 |
|---|---|---|---|---|---|---|---|---|
| Physical properties | Methanol tolerance (25°C) | % | > 2000 | > 2000 | > 2000 | > 2000 | > 2000 | > 2000 |
| | Viscosity | mPa·s | 900 | 1100 | 1000 | 1000 | 1000 | 1000 |
| | Adhesiveness (non-peeling area ratio) | % | 100 | 100 | 100 | 100 | 40 | 100 |
| Evaluation | Storage stability | - | A | A | A | A | A | C |
| | Workability | - | A | A | A | A | A | A |

The adhesive agent compositions of Examples have high adhesive strength, have excellent storage property and workability, and can be suitably used as an adhesive agent for a wet-type friction member.

Priority is claimed on Japanese Patent Application No. 2019-199837, filed November 1, 2019, the disclosure of which is incorporated herein by reference.

**Claims**

1.  An adhesive agent composition for a wet-type friction member, comprising:

    a resol-type phenol resin;
    a polyvinyl butyral; and
    a solvent,
    wherein a weight average molecular weight of the resol-type phenol resin is equal to or more than 1200 and
    equal to or less than 2000.

2.  The adhesive agent composition for a wet-type friction member according to claim 1,
    wherein an amount of a free phenol is equal to or less than 2.0% by mass with respect to a total solid content of the
    adhesive agent composition for a wet-type friction member.

3.  The adhesive agent composition for a wet-type friction member according to claim 1 or 2,
    wherein the adhesive agent composition for a wet-type friction member is substantially free of nickel and cobalt.

4.  The adhesive agent composition for a wet-type friction member according to any one of claims 1 to 3,
    wherein the adhesive agent composition for a wet-type friction member substantially consists of the resol-type phenol
    resin, the polyvinyl butyral, and the solvent.

5.  The adhesive agent composition for a wet-type friction member according to any one of claims 1 to 4,
    wherein a methanol tolerance (25°C) is equal to or more than 1000%.

<div align="center">

**INTERNATIONAL SEARCH REPORT**

</div>

| | International application No. |
|---|---|
| | PCT/JP2020/035417 |

| A. CLASSIFICATION OF SUBJECT MATTER |
|---|
| C09J 161/06(2006.01)i; C09J 11/06(2006.01)i; C09J 129/14(2006.01)i; C09K 3/14(2006.01)n; F16D 69/04(2006. 01)n <br> FI:     C09J161/06; C09J129/14; C09J11/06; C09K3/14 530G; C09K3/14 530E;       F16D69/04 A |
| According to International Patent Classification (IPC) or to both national classification and IPC |

| B. FIELDS SEARCHED |
|---|
| Minimum documentation searched (classification system followed by classification symbols) <br> C09J161/06; C09J11/06; C09J129/14; C09K3/14; F16D69/04 |

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)
    CAplus/REGISTRY (STN)

| C. DOCUMENTS CONSIDERED TO BE RELEVANT |
|---|

| Category* | Citation of document, with indication, where appropriate, of the relevant passages | Relevant to claim No. |
|---|---|---|
| A | JP 2014-024881 A (DIC CORPORATION) 06 February 2014 (2014-02-06) claims, examples, paragraph [0016] | 1-5 |
| A | JP 2006-083892 A (DYNAX CORPORATION) 30 March 2006 (2006-03-30) claims, examples | 1-5 |
| A | JP 2016-190968 A (SUMITOMO BAKELITE CO., LTD.) 10 November 2016 (2016-11-10) claims, examples | 1-5 |

☐   Further documents are listed in the continuation of Box C.     ☒   See patent family annex.

| | |
|---|---|
| \*    Special categories of cited documents: <br> "A"   document defining the general state of the art which is not considered to be of particular relevance <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search <br>     08 December 2020 (08.12.2020) | Date of mailing of the international search report <br>     22 December 2020 (22.12.2020) |
|---|---|
| Name and mailing address of the ISA/ <br>     Japan Patent Office <br>     3-4-3, Kasumigaseki, Chiyoda-ku, <br>     Tokyo 100-8915, Japan | Authorized officer <br><br><br> Telephone No. |

Form PCT/ISA/210 (second sheet) (January 2015)

## INTERNATIONAL SEARCH REPORT
Information on patent family members

International application No.

PCT/JP2020/035417

| Patent Documents referred in the Report | Publication Date | Patent Family | Publication Date |
|---|---|---|---|
| JP 2014-024881 A | 06 Feb. 2014 | (Family: none) | |
| JP 2006-083892 A | 30 Mar. 2006 | WO 2006/030927 A1 | |
| JP 2016-190968 A | 10 Nov. 2016 | CN 106008866 A<br>US 2016/0289367 A1<br>claims, examples | |

Form PCT/ISA/210 (patent family annex) (January 2015)

**REFERENCES CITED IN THE DESCRIPTION**

**Patent documents cited in the description**

- JP 2014024881 A
- JP 2006083892 A

- JP 2019199837 A